# EUROPEAN PATENT SPECIFICATION

(11) **EP 2 201 742 B1**
(45) Date of publication and mention of the grant of the patent: **14.12.2011**
(21) Application number: 07821323.8
(22) Date of filing: 15.10.2007
(51) Int. Cl.: H04L 29/06

(54) **PROVISIONING MOBILITY SERVICES TO LEGACY TERMINALS**
BEREITSTELLUNG VON MOBILITÄTSDIENSTEN FÜR VERALTETE ENDGERÄTE
APPROVISIONNEMENT DE SERVICES DE MOBILITÉ À DES TERMINAUX HÉRITÉS

(43) Date of publication of application: 30.06.2010
(73) Proprietor: Telefonaktiebolaget LM Ericsson (publ), 164 83 Stockholm (SE)
(72) Inventor: MELÉN, Jan, FI-02280 Espoo (FI); SALMELA, Patrik Mikael, FI-02400 Kirkkonummi (FI)
(74) Representative: Lind, Robert
(86) International application number: PCT/EP2007/060956
(87) International publication number: WO 2009/049663

(56) References cited:
- WO-A-2005/081466
- WO-A-2005/101753
- FMV: "Report on HIP for FMLS"[Online] 15 May 2007 (2007-05-15), XP002476400 Retrieved from the Internet: URL:http://www.fmv.se/upload/Bilder%20och% 20dokument/Vad%20gor%20FMV/Uppdrag/Ledsyst T/Nya%20dokument%20FMLS%200712/Technical%2 0Design%20Rules/LT1K%20P07-0061%20Report%2 0on%20HIP%20for%20FMLS.pdf> [retrieved on 2008-04-14]
- MATOS J SANTOS IT AVEIRO J GIRAO M LIEBSCH NEC EUROPE LTD R AGUIAR IT AVEIRO A: "Host Identity Protocol Location Privacy Extensions; draft-matos-hip-privacy-extensions-01.txt" IETF STANDARD-WORKING-DRAFT, INTERNET ENGINEERING TASK FORCE, IETF, CH, no. 1, 6 March 2006 (2006-03-06), XP015044394 ISSN: 0000-0004
- LAGANIER DOCOMO EURO-LABS L EGGERT NEC J: "Host Identity Protocol (HIP) Rendezvous Extension; draft-ietf-hip-rvs-05.txt" IETF STANDARD-WORKING-DRAFT, INTERNET ENGINEERING TASK FORCE, IETF, CH, vol. hip, no. 5, 7 June 2006 (2006-06-07), XP015045657 ISSN: 0000-0004 cited in the application
- MOSKOWITZ ICSALABS R ET AL: "Host Identity Protocol; draft-ietf-hip-base-09.txt" IETF STANDARD-WORKING-DRAFT, INTERNET ENGINEERING TASK FORCE, IETF, CH, vol. hip, no. 9, 2 October 2007 (2007-10-02), XP015051261 ISSN: 0000-0004 cited in the application

## Description

### Technical Field

The present invention relates to the provisioning of mobility services to legacy terminals and in particular to the provisioning of such services using the Host Identity Protocol.

### Background

An IP address describes a topological location of a node in a network. The IP address is used to route IP packets from a source node to a destination node. At the same time the IP address is also used to identify a node, thus providing two different functions in one entity. This is akin to a person's name and address being synonymous. When mobility is also considered, the situation becomes even more complicated: since IP addresses act as host identifiers, they should not be changed; however, since IP addresses also describe topological locations, they must necessarily change when a host changes its location in the network. Clearly, it is impossible to achieve both stability and dynamic changes at the same time.

In the case of so-called Mobile IP, the solution is to use a fixed home location providing a "home IP address" for a node. The home IP address both identifies a node and provides a stable location for it when it is at home. The current location information is available in the form of a "care-of address", which is used for routing purposes when the node is away from home. A node's home network is updated whenever the node is allocated a (new) care-of-address and takes care of forwarding packets addressed to the packet's home address, to the registered care-of-address.

Another solution to the problem of mobility handling is provided by the Host Identity Protocol (HIP) proposal (R. Moskowitz, P. Nikander, P. Jokela, "Host Identity Protocol", Internet Draft, work in progress, draft-ietf-hip-base-09.txt, IETF, 2007). HIP separates the location and identity roles of IP addresses by introducing a new name-space, the Host Identity (HI). In HIP, the Host Identity is a public cryptographic key of a public-private key-pair. The public key identifies the party that holds the only copy of the private key. A host possessing the private key of the key-pair can directly prove that it "owns" the public key that is used to identify it in the network.

The HIP Host Identity (HI), being a public key, can be quite long. It is therefore often represented with a 128-bit long Host Identity Tag (HIT) that is generated from the HI by hashing it. Thus, the HIT identifies a HI. Since the HIT is 128 bits long, it can be used for IPv6 applications directly as it is exactly the same length as an IPv6 address.

Applications are typically not interested in a (peer) node's location, but do need to know the identity of the peer. The identity is represented by the HIT. This means that the IP address only has importance on lower layers where routing is concerned. The HITs, which the applications use must of course be mapped to the corresponding IP addresses before any packets leave a node. This is achieved in a new Host Identity Layer as will now be described.

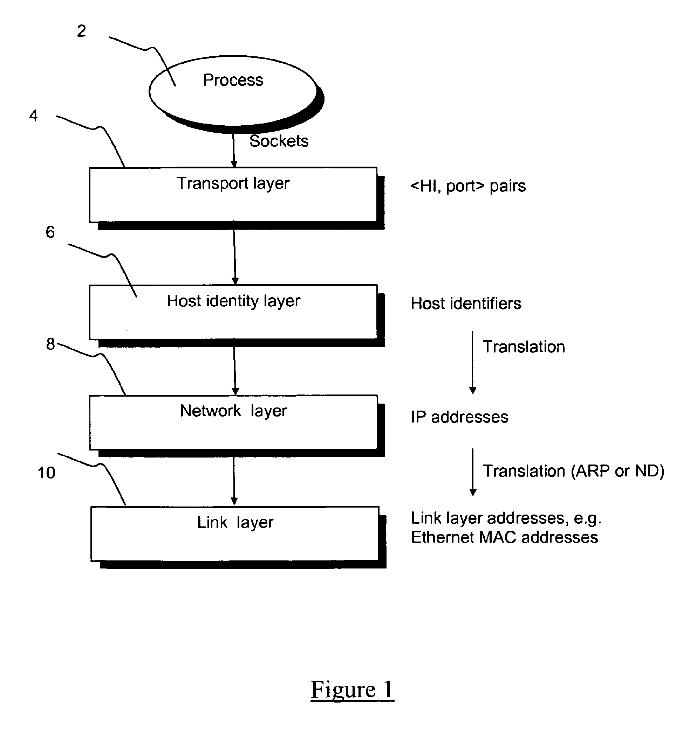

Figure 1 of the accompanying drawings illustrates the various layers in a HIP-based protocol architecture, comprising the standard transport layer 4, network layer 8 and link layer 10, with a process 2 communicating with the transport layer 4 below it. The new Host Identity Layer 6 is disposed between the transport layer 4 and the network layer 8. A primary role of the Host Identity Layer is to perform the mapping between HITs and IP addresses. Each packet arriving from the upper layer contains the HIT of a peer node as the destination address. The Host Identity Layer replaces the destination HIT with the appropriate destination IP address, and the source HIT is converted to the appropriate source IP address.

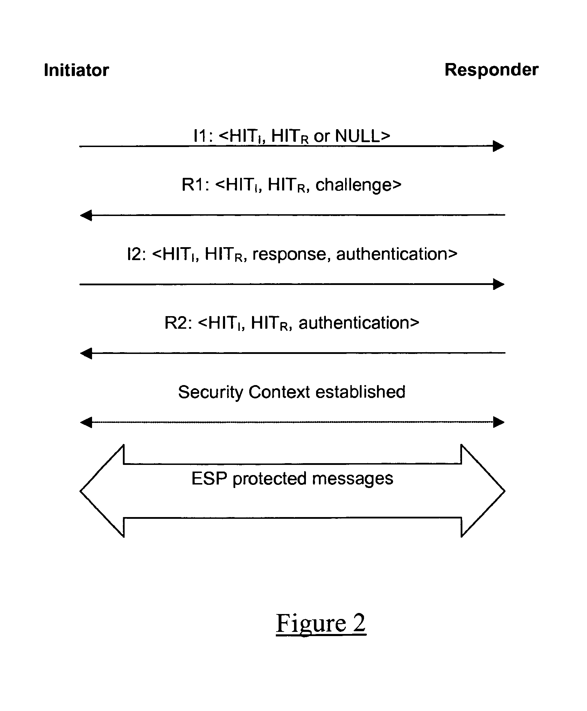

HIP defines a base message exchange containing four messages, i.e. a four-way handshake, and this is used to create a security association (SA) between HIP-enabled nodes. During the message exchange, the Diffie-Hellman procedure is used to create a session key and to establish a pair of IPsec Encapsulating Security Payload (ESP) Security Associations (SAs) between the nodes. Figure 2 of the accompanying drawings illustrates the four-way handshake. The negotiating parties are referred to as the "Initiator", starting the connection, and the "Responder". The Initiator begins the negotiation by sending an I1 packet that contains the HITs of the nodes participating in the negotiation. When the Responder receives the I1 packet, it sends back an R1 packet that contains a puzzle to be solved by the Initiator. The protocol is designed so that the Initiator must do most of the calculation during the puzzle solving. This gives some protection against Denial-of-Service (DoS) attacks. The R1 initiates also the Diffie-Hellman procedure, containing the public key of the Responder together with the Diffie-Hellman parameters.

Once the R1 packet is received, the Initiator solves the puzzle and sends a response cookie in an I2 packet together with an IPsec SPI value and its encrypted public key to the Responder. The Responder verifies that the puzzle has been correctly solved, authenticates the Initiator and creates the IPsec ESP SAs. The final R2 message contains the SPI value of the Responder.

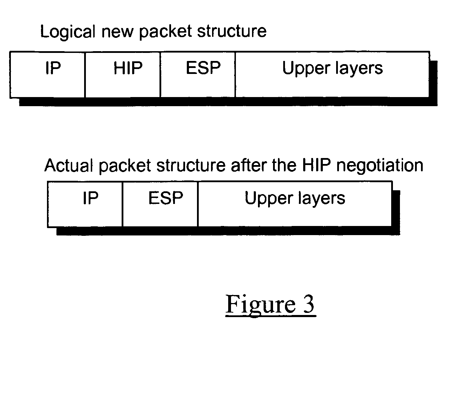

The SAs between peer nodes are bound to the Host Identities, represented by the HITs. However, the packets travelling in the network do not contain the actual HI (HIT) information, but rather the arriving packet is identified and mapped to the correct SA using the Security Parameter Index (SPI) value in the ESP header. Figure 3 of the accompanying drawings shows the logical and actual packet structures of a packet travelling in the network.

When an outgoing packet arrives at the HI layer from a higher layer, the destination HIT is verified from the IPsec SADB. If an SA matching the destination HIT is found, the packet payload is encrypted using the session key associated with the SA, and the source and destination IP addresses are substituted into the packet IP header for the source and destination HITs. At the receiving host, the SPI value is used to find the correct SA from the IPsec SADB. If an entry is found, the source and destination IP addresses can be changed to the corresponding HITs and the packet can be decrypted using the session key.

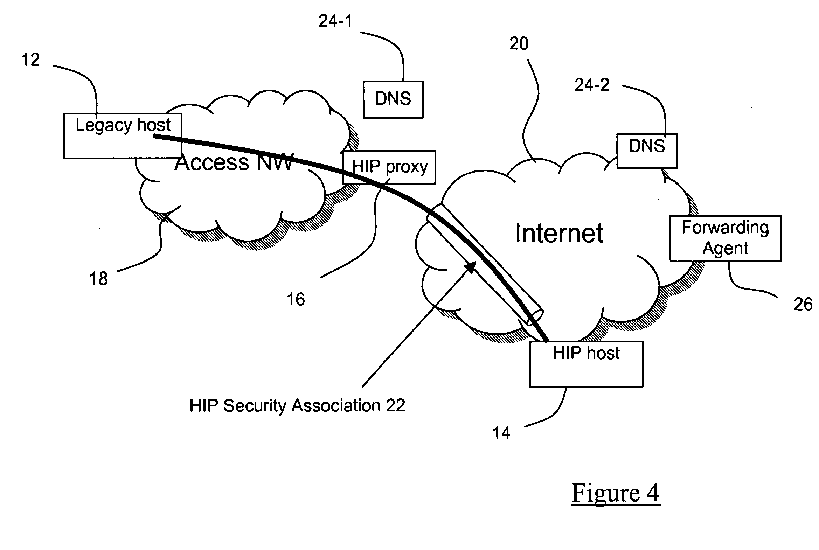

In order to allow legacy nodes which do not implement HIP to take advantage to some extent of the additional security benefits of HIP, proposals have been made to introduce a HIP proxy. The use of a HIP proxy is considered for example in W005081466 and WO05101753, and is illustrated in Figure 4 where a legacy host 12 is shown communicating with a HIP-enabled node 14 via a HIP proxy 16. The legacy host 12 accesses the HIP proxy 16 over an access network 18 while the HIP proxy 16 accesses the HIP node 14 over the Internet 20. To partially secure the connection between the legacy host 12 and the HIP node 14, all communications between the HIP proxy 16 and the HIP node 14 use a Security Association 22 set up between the HIP proxy 16 and the HIP node 14 in a similar way to that described above. A particular use case involving a HIP proxy might be a legacy 2G or 3G wireless mobile terminal making use of a GPRS access network 18. The HIP proxy is advantageously co-located with a GGSN of the GPRS network. Other components illustrated in Figure 4 are DNS servers 24-1 and 24-2, and a Forwarding Agent 26.

A node wishing to communicate with a peer node, and knowing only the HIT of that peer node, must of course obtain an IP address for the peer. The Host Identity Layer can obtain the mapping between a HIT and an IP address in several ways, for example using a DNS server. The location information for a given node held at the DNS server can be updated at any time by the node.

Problems with the DNS-based look-up procedure include latency of the DNS system when updating new data across the Internet. DNS uses caching mechanism that may cache the data for several hours or even days, and the DNS is therefore unable to efficiently handle updates that happen very frequently. The addresses stored in to the DNS are expected to be long lived and thus the DNS system is not suitable for handling mobility.

The Internet Engineering Task Force (IETF) has specified a new network entity known as a "rendezvous server" (RVS). The RVS provides an initial contact point for its clients. The clients of an RVS are HIP nodes that use the HIP Registration Protocol to register their HIT to IP address mappings with the RVS. Following registration, other HIP nodes can initiate a base exchange (I1 message) using the IP address of the RVS instead of the current IP address of the node they are attempting to contact. Included within the II message is the HIT of the destination node. The RVS determines the IP address of the destination HIP node, and forwards the I1 message to that address. In this way, clients of an RVS become reachable via the IP address of the RVS.

The RVS facilitates the introduction of moving network topologies in which HIP nodes are connected to a moving network which has one or more points of attachment to an (IP) access network. By introducing a HIP Mobile Router into the moving network, the RVS can be continuously updated with the current location of the HIP nodes whilst at the same time location update related signaling is minimised. The use of RVS and a HIP Mobile Router does not by itself allow legacy hosts within a moving network to take advantage of HIP-based security as, according to conventional approaches, a node must have a HIT in order register with the RVS.

WO2005/101753 describes the use of a HIP gateway or proxy to allow communications between a host within a first network environment and a HIP-enabled host within second network environment to be at least partially secured, i.e. secured over the leg between the gateway and the HIP-enabled host. WO2005/081466 also describes the use of a HIP gateway or proxy between a legacy host and a HIP-enabled host, with the gateway maintaining a mapping between a substitute IP address, used by the legacy host to identify the HIP-enabled host, and an actual IP address and HIT of the HIP-enabled host.

The IETF Internet draft titeld "Host Identity Protocol Location Privacy Extensions", (draft-matos hip-privacy-extensions-01) published 6 March 2006, describes an approach to establishing HIP sessions between HIP-enabled peers and which allows location privacy to be achieved.

### Summary

It is an object of the present invention to provide a means whereby legacy hosts connected to a moving network can take advantage of HIP-based security. This object is achieved by a method having the features of claim 1 and apparatuses having the features of claims 10 and 11.

Advantageous embodiments thereof are defined in the respective dependent claims.

### Brief Description of the Drawings

Figure 1, discussed hereinbefore, illustrates the various layers in the Host Identity Protocol;
Figure 2, also discussed hereinbefore, illustrates the operation of the four-way handshake in the HIP protocol;
Figure 3, also discussed hereinbefore, shows the logical and actual packet structures in HIP;
Figure 4, also discussed hereinbefore, is a schematic diagram illustrating the general network setup for communications between a legacy host and a HIP mode via a HIP proxy;
Figure 5 illustrates schematically a scenario in which a legacy host is attached to a moving network comprising a HIP proxy; and
Figure 6 illustrates a mobility related signalling flow associated within the scenario of
Figure 5.

### Detailed Description

Work is ongoing to facilitate the provision of moving networks which are substantially continuously connected to an IP network. An example of a moving network might be a collection of interconnected devices present within the same moving vehicle, or even on a person's body. Such a moving network will connect to the IP network via a fixed access point, but the identity of that access point will typically change as the network moves. In order to allow devices within the network to remain reachable as the network moves, some mechanism for signalling changes to location addresses (i.e. IP addresses) must be implemented. One solution for supporting moving networks is the IETF NEMO proposal. NEMO introduces a Mobile Router to the moving network which effectively hides the network mobility from the network devices. The mobile router is responsible for sending location address updates to peer nodes.

As an alternative to NEMO, it is possible to implement HIP-based moving networks by introducing a HIP Mobile Router into the moving network (or "subnetwork"). The HIP Mobile Router is responsible for handling mobility related signaling on behalf of HIP nodes in the subnetwork. By delegating the mobility related signaling rights to the HIP Mobile Router the HIP nodes will not be affected by the moving of the subnetwork and will not themselves have to perform mobility related signaling. This approach however requires that, in order to take advantage of HIP, devices within the subnetwork be HIP nodes. Legacy nodes cannot make use of a HIP Mobile Router.

As has been discussed above, it is possible to use a HIP proxy in order to allow legacy hosts to take advantage, at least to a limited extent, of the additional security benefits of HIP. In order to provide a stable reachable address for nodes, HIP proxies can perform DNS queries in order to obtain current IP addresses for (peer) HIP nodes. The HIP proxy therefore provides an alternative mechanism for enabling moving networks and, moreover, provides HIP-based network mobility to legacy terminals. However, a still better approach is to combine the use of HIP proxies with the RVS mechanism proposed by the IETF. This will now be described.

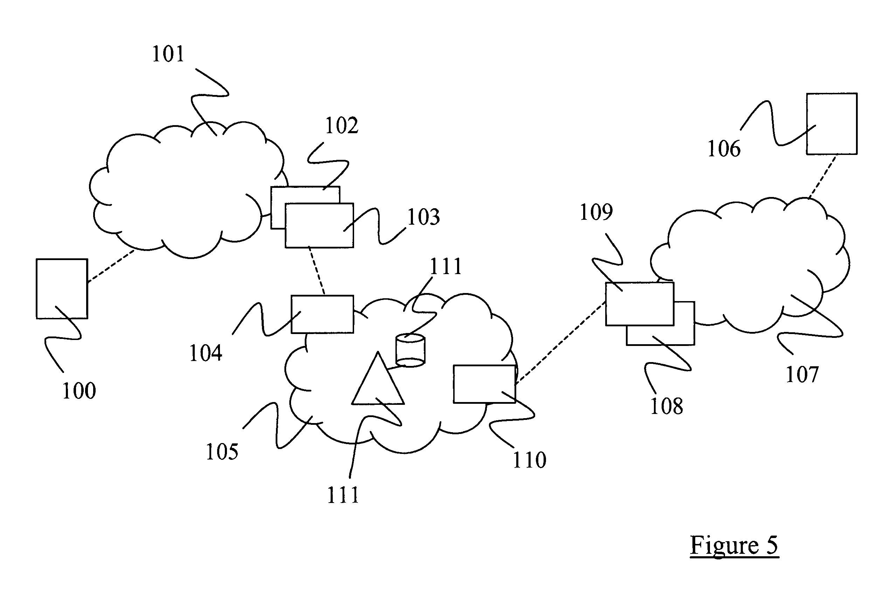

Figure 5 illustrates a scenario in which a legacy node 100 is connected to a moving network 101. The moving network could, for example, be a WLAN network. The moving network additionally comprises a HIP proxy 102 which is co-located with a (WLAN) router 103. The router 103 connects the moving network 101 to an IP network access point 104. As the moving network moves, it will be handed-off from one access point to another. The access point 104 provides access to an IP network 105, which may be, or may include, the Internet. Figure 5 illustrates a peer legacy node 106 which is similarly connected to a second moving network 107, via a HIP proxy 108, router 109, and access point 110.

A rendezvous server (RVS) 111 is located within the IP network, and implements the functionality of the IETF RVS specified for HIP. That is to say that the RVS 11 provides a meeting point for HIP nodes. The RVS is however provided with additional functionality as will now be described.

It is assumed that that the HIP proxies 102,108 are aware of the IP addresses provided to nodes within their respective mobile networks. These may be IPv4 and/or IPv6 addresses. More particularly, a HIP proxy knows (or can determine) the IP address prefix(es) used within its network, as well as the specific addresses that are in use from the available address space. The RVS is used to allow legacy hosts within a moving network to be reachable from outside of the network using the (locally allocated) IP addresses which might not be public, routable, addresses (but which are nonetheless unique).

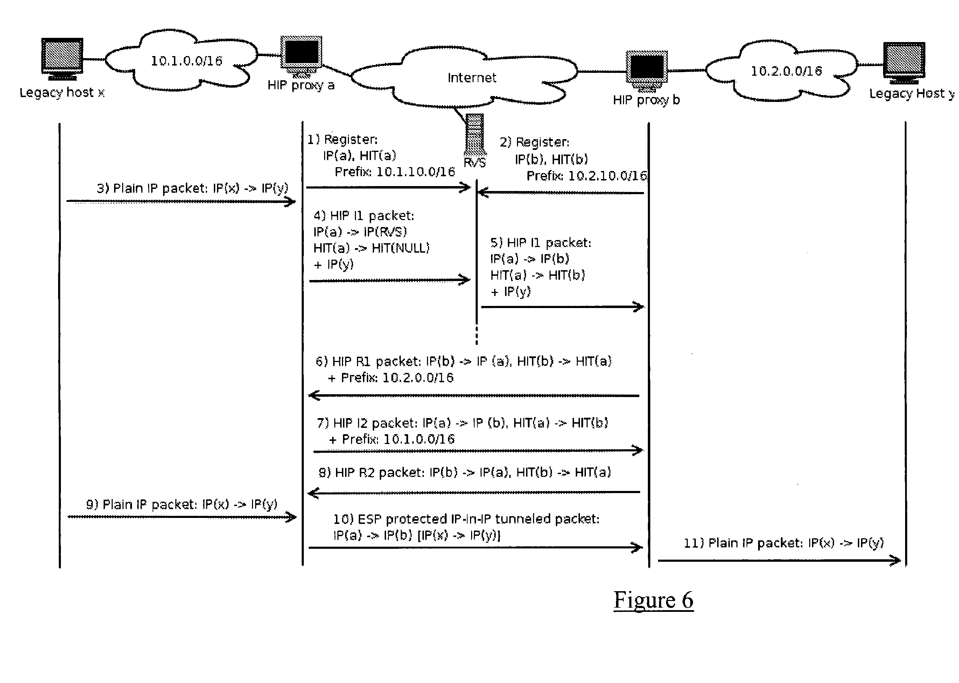

A mobile HIP proxy registers the address prefix(es) from its subnetwork to the HIP RVS system, in particular within a database 112 of the RVS system. [The RVS system might for example be some hierarchical RVS structure, a DHT based RVS system, or just a regular RVS.] With reference to the signalling diagram of Figure 6 (to be described further below), registration is performed at steps 1 and 2. This represents an extension to the current RVS specification as, instead of registering only its identity [HIT(a)] and current locator [IP(a)] to the RVS, the HIP proxy also registers the prefix(es) used in its subnetwork, and/or a list of addresses used in the subnetwork. When trying to locate a legacy host using the RVS, it is then necessary to match the IP address of the legacy host to a prefix in any entry in the RVS system. When a match is found, the corresponding RVS entry identifies the HIP proxy (IP address and HIT/HI) which can be used to contact the legacy host.

Consider the case where a legacy host (x) behind a HIP proxy (a) wants to connect to a peer legacy host (y) behind another HIP proxy (b). Host(x) first needs to know the locator of the peer host. How this information is obtained is not considered in detail here, but it would be possible to use the existing DNS system. Considering further the signalling shown in Figure 6, the legacy host (x) initiates a session with the peer host (y) by sending a regular packet (e.g. TCP SYN) to the peer (IP(x) -> IP(y)). The source and destination IP addresses contained within the packet can be private or public IP addresses. HIP proxy (a) intercepts the packet and checks if there is already a HIP association for that IP address pair. If so, the packet is sent out over that association. If there already exists a HIP association between the two proxies, but for different legacy hosts, that HIP association can still be used for the new connection since the complete IP packet is tunnelled between the proxies. Otherwise the proxy checks to see if it already knows which proxy has the prefix to which the destination address IP(y) belongs. If this information is found [IP(b), HIT(b)], then it can be used directly for establishing a HIP association between the two proxies as per the four-way handshake of Figure 2. However, if no useable association already exists, and the HIP proxy (a) does not have any information on the peer proxy, then it utilises the RVS system to establish a new HIP association as will now be described.

The HIP proxy (a) sends out an I1 packet (step 4) in opportunistic mode to the RVS system, i.e. the destination HIT field (i.e. where HIT(b) would be if it were known) is left empty. The destination address within the IP packet header is that of the RVS, but the IP address of the destination legacy host IP(y) is included in the I1 packet payload so that this information can be used by the RVS to locate the correct peer HIP proxy entry in the RVS. Upon receipt of the I1 packet, the RVS identifies the entry with a prefix that matches the prefix of IP(y) and from that entry the HIT of HIP proxy (b) and its IP address IP(b). The RVS then inserts HIT(b) into the I1 packet and the destination of the packet is changed to IP(b), before the packet is forwarded (step 5).

When the peer HIP proxy receives the I1 packet it replies as normal with an R1 packet. However, it includes within the packet the IP address prefix that it is serving in the subnetwork. The R1 packet is sent directly (step 6) to the originating HIP proxy which now learns the HIT and IP address of the peer proxy and also the prefix that the peer proxy is serving. [That learned prefix can later be used when new connections between the two subnetworks need to be established, e.g. for a different pair of legacy hosts.] When the originating HIP proxy now replies with the I2 packet (step 7) it includes the prefix of the subnetwork that it is serving, so that both proxies will now possess complete information. The HIP base exchange continues as normal to establish a HIP association between the two proxies (step 8). At this point a HIP tunnel has been setup and data packets can flow between the legacy hosts through the HIP tunnel (steps 9 to 11). Complete IP packets are tunnelled in an IP-in-IP tunnel between the HIP proxies, and once received at the destination proxy the original IP packet is unpacked and sent into the destination subnetwork with the original IP addresses [IP(x) -> IP(y)].

Considering now the case where a HIP host seeks to establish a HIP secured session with a legacy host that is within a moving network and behind a HIP proxy, the procedure is similar to that described above. The HIP sends the I1 packet to the RVS in opportunistic mode, and the RVS determines the responsible HIP proxy and forwards the I1 to it. The initiating HIP host receives the R1 response from the HIP proxy from which it learns the IP address and HIT of the proxy, as well as the IP address prefix for which the proxy is responsible. Of course, the HIP host is not responsible for a prefix, and therefore includes only its own IP address in the I2. The exchange then completes as normal.

When subsequently sending data packets, the HIP host needs to encapsulate (and when receiving, decapsulate) the packet into an IP-in-IP tunnel. The HIP host creates a plain data packet with source and destination IP addresses corresponding to its own address and that of the legacy host. This packet is used as payload for the outgoing HIP packet that will first have HITs in the IP header which then will be translated into the IP addresses of the HIP host and the HIP proxy (just as in regular HIP).

When it is the legacy host that initiates the connection to the HIP host, the same procedure that was used for the legacy host to legacy host connection is used. That is the I packet sent from the proxy (containing the HIT of the proxy) goes via the RVS system and is forwarded to the HIP host. The HIP host includes as a "prefix" in the R1 packet, its own address. The procedure completes as described.

An alternative approach to the registration of subnetwork prefixes at the RVS is to allow the HIP proxy to create temporary identities for the legacy hosts in the subnetwork. The HIP proxy then adds these identities to its registration entry in the RVS so that the entry contains HIT(a), IP(a), and a set of IP address/(temporary)HIT pairs for the legacy hosts in the subnetwork.

The HIP base exchange for this alternative approach is similar to the previous scenario except that the source HIT in the I1 packet is the temporary HIT assigned to the legacy host (a), and in the RVS system the temporary HIT assigned to the peer legacy host (b) is inserted into the destination HIT field (assuming that both peers are legacy hosts behind HIP proxies). However, from the RVS system the I1 packet is still sent to the IP address of the peer HIP proxy. When the peer HIP proxy replies with the R1 packet it includes (instead of the prefix of the subnetwork as in the previous case) the IP address of the peer legacy host (IP(b)). The originating HIP proxy requires IP(b) as, without it, it cannot map the incoming R1 packet (and included HIT) to the I1 packet sent out (nb. the I1 was sent in opportunistic mode with an empty destination HIT field). The originating HIP proxy includes the IP address of the legacy host(a) within the I2 packet so that the destination proxy learns the IP address pair of the legacy hosts. The base exchange continues as normal to establish a HIP association between the temporary HITs of the legacy hosts.

According to this approach, the plain IP packets are not tunnelled between the HIP proxies. Rather, the proxy replaces the IP addresses of the IP header with the HITs assigned to the legacy hosts, after which the packet undergoes regular HIP processing resulting in an ESP protected packet with the source and destination addresses of the outer IP header being those of the two proxies. When the ESP protected packet is received at the receiver side HIP proxy, the IP addresses of the packet are first replaced with HITs (as in regular HIP). The proxy then uses a stored mapping between the actual IP addresses of the legacy hosts and the temporary HITs to translate the HITs in the IP header to the actual IP addresses of the legacy hosts.

A significant difference between this approach and the prefix-based approach described above is that, with the former, it is not possible for the sending side proxy to reuse an old HIP association where the two legacy hosts to which a new packet (e.g. TCP SYN) are not the same as those to which the old association relates. In this case, the HIP proxy must still send the I1 packet via RVS. Only if the old HIP association relates to the same legacy hosts can the old association be reused and the HIP base exchange skipped.

In the case that the HIP proxy creates temporary identities for the legacy hosts in its subnetwork, then a HIP host can connect to one of the legacy hosts just as if it was a regular HIP host. If the HIP host knows the temporary identity of the legacy host and the locator of the proxy then it can just send an I1 packet to the locator of the proxy with the destination identity set to the temporary HIT. The HIP host needs to include the IP address of the legacy host in the I1 packet and its own IP address in the I2 packet.

When it is the legacy host that initiates a connection to a HIP host, the procedure is also similar to a regular HIP base exchange except of course that the first "plain" data packet from the legacy host triggers the proxy to perform the HIP base exchange with the HIP host. The legacy host sends the data packet to the IP address of the HIP host and the proxy sends an opportunistic I1 to the RVS system with the IP address of the HIP host. The RVS system finds the RVS entry of the HIP host (which does not contain any prefix information) and forwards the I1 packet to the HIP host with the HIT of the HIP host in the packet. The HIP host replies with the R1 packet and includes its IP address in the packet. The base exchange continues as described.

Returning to the subject of mobility, it will be appreciated that as the HIP proxy registers the prefix or addresses it is serving into the RVS system, the proxy, and thus also the legacy hosts in its subnetwork, can always be found via the RVS. When the whole subnetwork, including the proxy, moves, the proxy will update the RVS system with its current location. The proxy will also perform location updates with the peers (legacy and HIP hosts) on behalf of its legacy hosts. The HIP connections established by the HIP proxy will by default (since it is HIP) be changed to start from new locators without breaking the end-to-end connections between legacy hosts and HIP/legacy hosts.

## Claims

1. A method of facilitating access to a Host Identity Protocol security procedure by a legacy host (100) connected to a moving network (101), the method **characterised by**:
rousing IP tragic between said legacy host (100) and a fixed access network (105) via a Host Identity Protocol proxy (102) within the moving network;
at the Host Identity Protocol proxy (102), registering a local IP address or temporary Host Identity Tag of the legacy host with a rendezvous server (111) within or connected to said fixed network, together with an IP address and a Host Identity or Host Identity Tag of the Host Identity Protocol proxy (102);
routing a Host Identity Protocol I1 packet destined for said legacy host (100) , via the rendezvous server (111);
at the rendezvous server, mapping a destination legacy host IP address or Host Identity Tag contained within said II packet to the registered IP address or temporary Host Identity Tag of the legacy host (100) to identify the Host Identity Protocol proxy (102); and
forwarding said Host Identity Protocol II packet from the rendez vous server (111) to the Host Identity Protocol proxy (102).

2. A method according to claim 1 and comprising registering the local IP address of the legacy host (100) with the rendezvous server (111) by way of registering an IP address prefix covering a range of IP addresses containing said local IP address.

3. A method according to claim 2 and comprising, upon receipt of the Host Identity Protocol I1 packet at the rendezvous server (111) destined for said legacy host (100):
identifying the Host Identity or Host Identity Tag of said Host Identity Protocol proxy (102) by mapping the legacy host destination address of the Host Identity Protocol I1 packet to said IP address range;
including the Host Identity or Host Identity Tag in the 11 packet;
forwarding the I1 packet to the Host Identity Protocol proxy (102) at the registered IP address; and
completing the Host Identity Protocol handshake to establish HIP security associations between the Host Identity Protocol proxy (102) and an initiator of the I1 packet.

4. A method according to claim 3, wherein said legacy host destination address is contained within a payload parameter of the Host Identity Protocol I1 packet.

5. A method according to claim 3 or 4 and comprising, following establishment of said security associations, tunneling data packets between said Host Identity Protocol proxy (102) and said initiator through an IP-in-IP tunnel, packets being encapsulated and decapsulated at the Host Identity Protocol proxy (102).

6. A method according to claim 5 wherein said Host Identity Protocol I1 packet is sent from the initiator to the rendezvous server (111) in opportunistic mode, and the Host Identity or Host Identity Tag of the Host Identity Protocol proxy (102) is included by the rendezvous server (111) in the null destination Host Identity/Host Identity Tag field of the packet.

7. A method according to claim 1 and comprising registering a temporary Host Identity Tag of the legacy host (100) with the rendezvous server (111) and, upon receipt of a Host Identity Protocol I1 packet at the rendezvous server (111) destined for said legacy host, identifying the temporary Host Identity Tag registered for the legacy host (100), including the registered temporary Host Identity Tag in the I1 1 packet, forwarding the I1 packet to the registered IP address of the Host Identity Protocol proxy (102), and completing the Host Identity Protocol handshake between the Host Identity Protocol proxy (102) and the initiator of the I1 packet.

8. A method according to claim 7 and comprising, following the completion of said handshake, for data packets sent between said legacy host (100) and said initiator, performing a mapping at the Host Identity Protocol proxy (102) between ESP SPIs and local IP addresses.

9. A method according to claim 1 and comprising registering the temporary Host Identity Tag of the legacy host with a rendezvous server by way of registering a set or range of temporary Host Identity Tags containing said temporary Host Identity Tag.

10. Apparatus configured to operate within a moving network as a Host Identity Protocol proxy (102) and **characterised by** means for registering a local IP address or temporary Host Identity Tag of a legacy host (100), attached to the moving network, with a rendezvous server (111) together with an IP address and a Host Identity or Host Identity Tag of the Host Identity Protocol proxy, and means for receiving from the rendezvous server a Host Identity Protocol I1 packet directed to the legacy host.

11. Apparatus configured to operate as a rendezvous server (111) within an IP network and **characterised by** means for registering a local IP address or temporary Host Identity Tag of a legacy host (100), attached to a moving network (101), together with an IP address and a Host Identity or Host Identity Tag of a Host Identity Protocol proxy (102), in response to a request from said Host Identity Protocol proxy, means for mapping an incoming Host Identity Protocol I1 packet to the Host Identity Protocol proxy (102) using a local IP address or temporary Host Identity Tag contained in the 11 packet, and means for forwarding the Host Identity Protocol I1 packet to the Host Identity Protocol proxy at the registered IP address of the Host Identity Protocol proxy (102).

## Patentansprüche

1. Verfahren zum Erleichtern des Zugangs zu einer HIP(Host-Identitäts-Protokoll)-Sicherheitsprozedur durch einen Legacy-Host (100), der an ein bewegliches Netz (101) angeschlossen ist, wobei das Verfahren **gekennzeichnet ist durch**:
Routen von IP-Verkehr zwischen dem Legacy-Host (100) und einem festen Zugangsnetz (105) über einen HIP(Host-Identitäts-Protokoll)-Proxy (102) innerhalb des beweglichen Netzes;
am HIP-Proxy (102) das Registrieren einer lokalen IP-Adresse oder eines temporären Host-Identitäts-Tags des Legacy-Hosts mit einem Rendezvous-Server (111) innerhalb des festen Netzes oder an dasselbe angeschlossen, zusammen mit einer IP-Adresse und einer Host-Identität oder einem Host-Identitäts-Tag des HIP-Proxys (102);
Routen eines HIP-I1-Pakets, das über den Rendezvous-Server (111) für den Legacy-Host (100) bestimmt ist;
am Rendezvous-Server das Abbilden einer IP-Adresse des Ziel-Legacy-Hosts oder eines Host-Identitäts-Tags, der im I1-Paket enthalten ist, auf die registrierte IP-Adresse oder den temporären Host-Identitäts-Tag des Legacy-Hosts (100), um den HIP-Proxy (102) zu identifizieren; und
Weiterleiten des HIP-I1-Pakets vom Rendezvous-Server (111) an den HIP-Proxy (102).

2. Verfahren nach Anspruch 1, außerdem das Registrieren der lokalen IP-Adresse des Legacy-Hosts (100) mit dem Rendezvous-Server (111) durch Registrieren eines IP-Adresspräfixes umfassend, das einen Bereich von IP-Adressen erfasst, der die lokale IP-Adresse enthält.

3. Verfahren nach Anspruch 2, außerdem nach Empfang des für den Legacy-Host (100) bestimmten HIP-I1-Pakets am Rendezvous-Server (111) Folgendes umfassend:
Identifizieren der Host-Identität oder des Host-Identitäts-Tags des HIP(Host-Identitäts-Protokoll)-Proxys (102) durch Abbilden der Legacy-Host-Zieladresse des HIP-I1-Pakets auf den IP-Adressbereich;
Einschließen der Host-Identität oder des Host-Identitäts-Tags im I1-Paket;
Weiterleiten des I1-Pakets an den HIP-Proxy (102) an der registrierten IP-Adresse; und
Abschließen des HIP-Handshakes, um HIP-Sicherheitsverbindungen zwischen dem HIP-Proxy (102) und einem Initiator des I1-Pakets aufzubauen.

4. Verfahren nach Anspruch 3, worin die Legacy-Host-Zieladresse innerhalb eines Payload-Parameters des HIP-I1-Pakets enthalten ist.

5. Verfahren nach Anspruch 3 oder 4, außerdem nach Aufbau der Sicherheitsverbindungen Tunnelung von Datenpaketen zwischen dem HIP-Proxy (102) und dem Initiator durch einen IP-in-IP-Tunnel umfassend, wobei Pakete am HIP-Proxy (102) verkapselt und entkapselt werden.

6. Verfahren nach Anspruch 5, worin das HIP-I1-Paket vom Initiator im Opportunitätsmodus an den Rendezvous-Server (111) gesendet wird und die Host-Identität oder der Host-Identitäts-Tag des HIP-Proxys (102) durch den Rendezvous-Server (111) im Nullziel-Host-Identitäts/Host-Identitäts-Tag-Feld des Pakets s eingeschlossen wird.

7. Verfahren nach Anspruch 1, außerdem umfassend: das Registrieren eines temporären Host-Identitäts-Tags des Legacy-Hosts (100) mit dem Rendezvous-Server (111) und nach Empfang eines HIP-I1-Pakets am Rendezvous-Server (111), das für den Legacy-Host bestimmt ist, das Identifizieren des für den Legacy-Host (100) registrierten temporären Host-Identitäts-Tags, das Einschließen des registrierten temporären Host-Identitäts-Tags im I1-Paket, das Weiterleiten des I1-Pakets an die registrierte IP-Adresse des HIP-Proxys (102) und das Abschließen des HIP-Handshakes zwischen dem HIP-Proxy (102) und dem Initiator des I1-Pakets.

8. Verfahren nach Anspruch 7, außerdem umfassend, dass nach Abschluss des Handshakes für Datenpakete, die zwischen dem Legacy-Host (100) und dem Initiator gesendet werden, eine Abbildung am HIP-Proxy (102) zwischen ESP SPIs und lokalen IP-Adressen ausgeführt wird.

9. Verfahren nach Anspruch 1, außerdem umfassend, dass der temporäre Host-Identitäts-Tag des Legacy-Hosts mit einem Rendezvous-Server registriert wird, indem eine Menge oder ein Bereich von temporären Host-Identitäts-Tags registriert werden, die einen temporären Host-Identitäts-Tag einschließen.

10. Vorrichtung, konfiguriert zum Betrieb innerhalb eines beweglichen Netzes als ein HIP(Host-Identitäts-Protokoll)-Proxy (102) und **gekennzeichnet durch** Mittel zum Registrieren einer lokalen IP-Adresse oder eines temporären Host-Identitäts-Tags eines Legacy-Hosts (100), der an das bewegliche Netz angeschlossen ist, mit einem Rendezvous-Server (111) zusammen mit einer IP-Adresse und einer Host-Identität oder einem Host-Identitäts-Tag, und Mittel, um vom Rendezvous-Server ein HIP-I1-Paket zu empfangen, das an den Legacy-Host geleitet wird.

11. Vorrichtung, konfiguriert zum Betrieb als ein Rendezvous-Server (111) innerhalb eines IP-Netzes und **gekennzeichnet durch** Mittel zum Registrieren einer lokalen IP-Adresse oder eines temporären Host-Identitäts-Tags eines Legacy-Hosts (100), der an ein bewegliches Netz (101) angeschlossen ist, zusammen mit einer IP-Adresse und einer Host-Identität oder einem Host-Identitäts-Tags eines HIP-Proxys (102) als Antwort auf eine Anforderung vom HIP-Proxy, Mittel zum Abbilden eines eingehenden Hip-I1-Pakets auf den HIP-Proxy (102) unter Verwendung einer lokalen IP-Adresse oder eines temporären Host-Identitäts-Tags, der im I1-Paket eingeschlossen ist, und Mittel zum Weiterleiten des HIP-I1-Pakets an den HIP-Proxy an der registrierten IP-Adresse des HIP-Proxys (102).

## Revendications

1. Procédé pour faciliter un accès à une procédure de sécurité de protocole d'identité d'hôte par un hôte d'héritage (100) connecté à un réseau mobile (101), le procédé étant **caractérisé par** les étapes consistant à :
acheminer un trafic IP entre ledit hôte d'héritage (100) et un réseau d'accès fixe (105) par l'intermédiaire d'un serveur mandataire de protocole d'identité d'hôte (102) dans le réseau mobile ;
au niveau du serveur mandataire de protocole d'identité d'hôte (102), enregistrer une étiquette d'identité d'hôte temporaire ou une adresse IP locale de l'hôte d'héritage par un serveur de Rendezvous (111) dans ou connecté audit réseau fixe, avec une adresse IP et une identité d'hôte ou une étiquette d'identité d'hôte du serveur mandataire de protocole d'identité d'hôte (102) ;
acheminer un paquet I1 de protocole d'identité d'hôte destiné audit hôte d'héritage (100), par l'intermédiaire du serveur de Rendezvous (111) ;
au niveau du serveur de Rendezvous, mapper une adresse IP d'hôte d'héritage de destination ou une étiquette d'identité d'hôte contenue dans ledit paquet I1 vers l'adresse IP enregistrée ou une étiquette d'identité d'hôte temporaire de l'hôte d'héritage (100) pour identifier le serveur mandataire de protocole d'identité d'hôte (102) ; et
réacheminer ledit paquet I1 de protocole d'identité d'hôte du serveur de Rendezvous (111) vers le serveur mandataire de protocole d'identité d'hôte (102).

2. Procédé selon la revendication 1 et consistant à enregistrer l'adresse IP locale de l'hôte d'héritage (100) par le serveur de Rendezvous (111) au moyen d'un enregistrement d'un préfixe d'adresse IP couvrant une plage d'adresses IP contenant ladite adresse IP locale.

3. Procédé selon la revendication 2 et consistant, lors de la réception du paquet I1 de protocole d'identité d'hôte au niveau du serveur de Rendezvous (111) destiné audit hôte d'héritage (100), à :
identifier l'identité d'hôte ou l'étiquette d'identité d'hôte dudit serveur mandataire de protocole d'identité d'hôte (102) en mappant l'adresse de destination d'hôte d'héritage du paquet I1 de protocole d'identité d'hôte vers ladite plage d'adresses IP ;
inclure l'identité d'hôte ou l'étiquette d'identité d'hôte dans le paquet I1 ;
réacheminer le paquet I1 vers le serveur mandataire de protocole d'identité d'hôte (102) à l'adresse IP enregistrée ; et
achever l'échange d'authentification de protocole d'identité d'hôte pour établir des associations de sécurité HIP entre le serveur mandataire de protocole d'identité d'hôte (102) et un initiateur du paquet I1.

4. Procédé selon la revendication 3, dans lequel ladite adresse de destination d'hôte d'héritage est contenue dans un paramètre de charge utile du paquet I1 de protocole d'identité d'hôte.

5. Procédé selon la revendication 3 ou 4 et comprenant, à la suite de l'établissement desdites associations de sécurité, la tunnellisation de paquets de données entre ledit serveur mandataire de protocole d'identité d'hôte (102) et ledit initiateur à travers un tunnel IP dans IP, les paquets étant encapsulés et désencapsulés au niveau du serveur mandataire de protocole d'identité d'hôte (102).

6. Procédé selon la revendication 5 dans lequel ledit paquet I1 de protocole d'identité d'hôte est envoyé par l'initiateur au serveur de Rendezvous (111) dans un mode opportuniste, et l'identité d'hôte ou l'étiquette d'identité d'hôte du serveur mandataire de protocole d'identité d'hôte (102) est incluse par le serveur de Rendezvous (111) dans un champ d'identité d'hôte de destination/d'étiquette d'identité d'hôte nul du paquet.

7. Procédé selon la revendication 1 et consistant à enregistrer une étiquette d'identité d'hôte temporaire de l'hôte d'héritage (100) par le serveur de Rendezvous (111) et, lors de la réception d'un paquet I1 de protocole d'identité d'hôte au niveau du serveur de Rendezvous (111) destiné audit hôte d'héritage, identifier l'étiquette d'identité d'hôte temporaire enregistrée pour l'hôte d'héritage (100), comprenant l'étiquette d'identité d'hôte temporaire enregistrée dans le paquet I1, acheminer le paquet I1 à l'adresse IP enregistrée du serveur mandataire de protocole d'identité d'hôte (102), et achever l'échange d'authentification de protocole d'identité d'hôte entre le serveur mandataire de protocole d'identité d'hôte (102) et l'initiateur du paquet I1.

8. Procédé selon la revendication 7 et consistant à effectuer, à la suite de l'achèvement dudit échange d'authentification, pour des paquets de données envoyés entre ledit hôte d'héritage (100) et ledit initiateur, un mappage au niveau du serveur mandataire de protocole d'identité d'hôte (102) entre des SPI ESP et des adresses IP locales.

9. Procédé selon la revendication 1 et consistant à enregistrer l'étiquette d'identité d'hôte temporaire de l'hôte d'héritage par un serveur de Rendezvous au moyen de l'enregistrement d'un ensemble ou d'une plage d'étiquettes d'identité d'hôte temporaires contenant ladite étiquette d'identité d'hôte temporaire.

10. Appareil configuré pour fonctionner dans un réseau mobile en tant que serveur mandataire de protocole d'identité d'hôte (102) et **caractérisé par** des moyens pour enregistrer une adresse IP locale ou une étiquette d'identité flottante temporaire d'un hôte d'héritage (100), attachée au réseau mobile, par un serveur de Rendezvous (111) avec une adresse IP et une identité d'hôte ou une étiquette d'identité d'hôte du serveur mandataire de protocole d'identité d'hôte, et des moyens pour recevoir du serveur de Rendezvous un paquet I1 de protocole d'identité d'hôte dirigé vers l'hôte d'héritage.

11. Appareil configuré pour fonctionner en tant que serveur de Rendezvous (111) dans un réseau IP et **caractérisé par** des moyens pour enregistrer une adresse IP locale ou une étiquette d'identité d'hôte temporaire d'un hôte d'héritage (100), attachée à un réseau mobile (101), avec une adresse IP et une identité d'hôte ou une étiquette d'identité d'hôte d'un serveur mandataire de protocole d'identité d'hôte (102), en réponse à une demande provenant dudit serveur mandataire de protocole d'identité d'hôte, des moyens pour mapper un paquet I1 de protocole d'identité d'hôte entrant vers le serveur mandataire de protocole d'identité d'hôte (102) en utilisant une adresse IP locale ou une étiquette d'identité d'hôte temporaire contenue dans le paquet I1, et des moyens pour réacheminer le paquet I1 de protocole d'identité d'hôte vers le serveur mandataire de protocole d'identité d'hôte à l'adresse IP enregistrée du serveur mandataire de protocole d'identité d'hôte (102).
